# EUROPÄISCHE PATENTANMELDUNG

(11) **EP 1 331 181 A1**
(43) Veröffentlichungstag der Anmeldung: **30.07.2003**
(21) Anmeldenummer: 03405001.3
(22) Anmeldetag: 03.01.2003
(51) Int. Cl.: B65G 47/51

(54) **Einrichtung und Verfahren zum Fördern von gleichartigen Gegenständen**

(30) Priorität: 24.01.2002 CH 1142002
(71) Anmelder: Rotzinger AG, 4303 Kaiseraugst (CH)
(72) Erfinder: Philipp, Kurt, 79618 Rheinfelden (DE)
(74) Vertreter: Schwander, Kuno

(57) **Zusammenfassung**

Die Einrichtung (1) dient zum Fördern von gleichartigen Gegenständen (3), beispielsweise Schokoladentafeln, und hat eine Zufuhrbahn (17), eine Abtransportierbahn (23) mit einer quer zum Endabschnitt (18) der Zufuhrbahn (17) verlaufenden Querbahn (24) und eine Ausgleichsvorrichtung (21), um in regelmässigen oder unregelmässigen Zeitabständen von der Zufuhrbahn (17) zugeführte Gegenstände (3) in regelmässigen Abständen auf der Abtransportierbahn (23) anzuordnen. Die Ausgleichsvorrichtung (21) besitzt zwei Pufferspeicher (26, 27) und Transfermittel, um Gegenstände (3) von der Zufuhrbahn (17) in die Speicher (26, 27) und von diesen auf die Querbahn (24) zu transferieren. Die beiden Pufferspeicher (26, 27) sind dabei gemeinsam in einem Gestelle angeordnet und besitzen mehrere intermittierend bewegbare Speichereinheiten (28, 29), die an einem vertikal über mehrere Umlenkrollen laufenden Kettenpaar (30, 31) hängend befestigt sind und auf höchstens der halben Länge des Kettenpaares (30, 31) je einen Gondelzug bilden. Die beiden Kettenpaare (30, 31) und somit auch die Speichereinheiten (28, 29) sind fluchtend zu einander angeordnet und werden über je eine Welle angetrieben, d.h., es ist je ein Antrieb für das erste, äussere Kettenpaar (30) und ein Antrieb für das zweite, innere Kettenpaar (31) vorgesehen.

## Beschreibung

Die Erfindung betrifft eine Einrichtung zum Fördern von gleichartigen Gegenständen. Bei den Gegenständen kann es sich beispielsweise um Schokoladentafeln handeln, die von einer Produktionsvorrichtung zu mindestens einer Verpackungsvorrichtung gefördert werden. Die Gegenstände können jedoch statt aus Schokoladentafeln aus anderen stückförmigen, süssen oder nicht-süssen Nahrungsmitteln, zum Beispiel Gebäckstükken, oder aus Dosen oder sonstigen Behältern mit irgend einer Füllung oder aus Bauteilen für den Maschinenbau, zum Beispiel Kugellagern, bestehen, die zu einer Verpackungsvorrichtung oder sonstigen Bearbeitungsvorrichtung gefördert werden.

Bei bekannten Einrichtungen zur Herstellung und Verpakkung von Schokoladentafeln werden die von einer Produktionsvorrichtung produzierten Tafeln über eine Zufuhrbahn zu Kettenspeichern, danach durch diese hindurch zu Verpackungsvorrichtungen transportiert. Jeder Kettenspeicher kann zum Beispiel ungefähr gemäss der DE 90 12 074 U ausgebildet sein und dient als Ausgleichsvorrichtung zum Ausgleichen von Schwankungen der Zufuhrrate von Tafeln oder der Verpackungsrate der Verpackungsvorrichtung sowie von vollständigen, beispielsweise 5 min bis 45 min dauernden Betriebsunterbrüchen der Produktionsvorrichtung oder der Verpackungsvorrichtung. Ein derartiger Kettenspeicher besitzt typischerweise 150 bis ungefähr 1200 an zwei endlosen Ketten angehängte Gondeln oder Tablare zum Aufnehmen je einer Reihe Tafeln. Jede Kette wird durch mehrere in einem Gestell gelagerte Kettenräder und durch mehrere an vertikal verstellbaren Schlitten gelagerte Kettenräder umgelenkt und bildet eine Anzahl von Schleifen.

Die bekannten Einrichtungen haben daher die Nachteile, dass die für jede Verpackungsvorrichtung benötigten, das Durchlaufen aller geförderten Tafeln ermöglichenden Kettenspeicher gross sowie teuer sind, hohe Reinigungs- sowie Wartungskosten verursachen und viel Platz beanspruchen. Ferner dauert es nach dem Start der Produktionsvorrichtung ziemlich lang, bis die Kettenspeicher ausreichend gefüllt sind und bis Schokoladentafeln zur Verpackungsmaschine gelangen. Bei der Förderung anderer Gegenstände können sich ähnliche Probleme und Nachteile ergeben.

Der Erfindung liegt die Aufgabe zugrunde, eine Einrichtung zu schaffen, die ermöglicht, Nachteile der bekannten Einrichtungen zu beheben und bei der die Ausgleichsvorrichtung kostengünstig herstellbar ist, möglichst geringe Reinigungs- sowie Wartungskosten verursacht und nur wenig Platz beansprucht.

Diese Aufgabe wird erfindungsgemäss durch eine Einrichtung mit den Merkmalen des Anspruchs 1 gelöst.

Vorteilhafte Weiterbildungen der Einrichtung gehen aus den abhängigen Ansprüchen hervor.

Bei einer zweckmässigen Weiterbildung des Erfindungsgegenstandes, ist die Zufuhrbahn ausgebildet, um nacheinander einzelne Reihen oder eventuell nacheinander Reihen-Gruppen mit zwei oder mehr zusammengehörenden, quer zur Förderrichtung der Zufuhrbahn verlaufenden Reihen zur Ausgleichsvorrichtung zu transportieren. Die Zufuhrrate beträgt bei einem vorgesehenen Betrieb zum Beispiel etwa 20 bis 50 Reihen oder Reihen-Gruppen pro Minute. Transfermittel können dann die Reihen derart auf die in Transportrichtung hinter der Ausgleichsvorrichtung angeordnete Abtransportierbahn transferieren, dass jede transferierte Reihe ungefähr oder genau in der Förderrichtung der Abtransportierbahn verläuft und dass die allenfalls zu ein und derselben Reihen-Gruppe gehörenden Reihen hintereinander auf der Abtransportierbahn angeordnet werden. Die Ausgleichsvorrichtung braucht nur eine kleine Anzahl von Gegenständen oder einzelne Reihen von Gegenständen oder Reihen-Gruppen speichern zu können, um Schwankungen der pro Zeiteinheit von der Zufuhrbahn zugeführten und/oder von der Abtransportierbahn abtransportierten Gegenstände und/oder kurze Unterbrüche der Zufuhr oder des Abtransports auszugleichen. Bei einer zweckmässigen Ausgestaltung des Erfindungsgegenstandes ist die Ausgleichsvorrichtung ausgebildet, um beispielsweise zwanzig bis sechzig nacheinander von der Zufuhrbahn zugeführte, einzelne Gegenstände oder Reihen oder Reihen-Gruppen der genannten Art zu speichern. Die Ausgleichsvorrichtung kann ferner vorzugsweise diejenige Anzahl Gegenstände speichern und wieder abgeben, die bei einem vorgesehenen Idealbetrieb von der Zufuhrbahn während einer Zeitdauer zugeführt wird, die vorzugsweise mindestens fünf Sekunden, vorzugsweise höchstens sechzig Sekunden und zum Beispiel zehn bis dreissig Sekunden beträgt. Die erfindungsgemässe Ausgleichsvorrichtung kann dementsprechend einfach sowie kostengünstig hergestellt werden, benötigt nur wenig Platz, verursacht nur einen kleinen Arbeitsaufwand für die Reinigung sowie Wartung und kann beim Beginn der Zufuhr in kurzer Zeit teilweise aufgefüllt sowie bei der Beendigung der Zufuhr in kurzer Zeit entleert werden.

Der Erfindungsgegenstand und Vorteile von diesem werden nachfolgend anhand eines in der Zeichnung dargestellten Ausführungsbeispieles erläutert. In der Zeichnung zeigen
die Figur 1 eine vereinfachte Seitenansicht einer Einrichtung zum Fördern und Verpacken von Gegenständen und
die Figur 2 eine Draufsicht auf die in der Figur 1 gezeichnete Einrichtung.

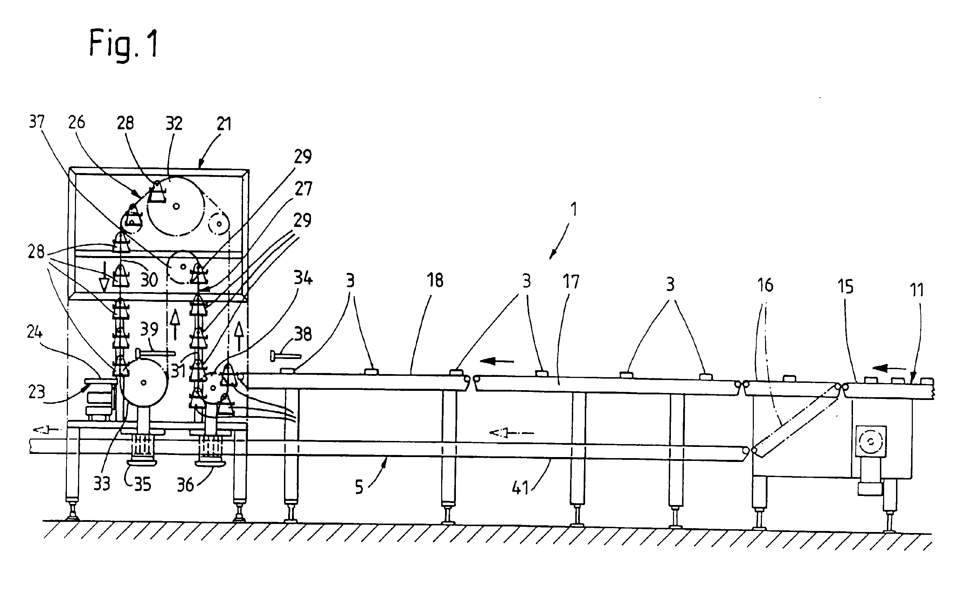

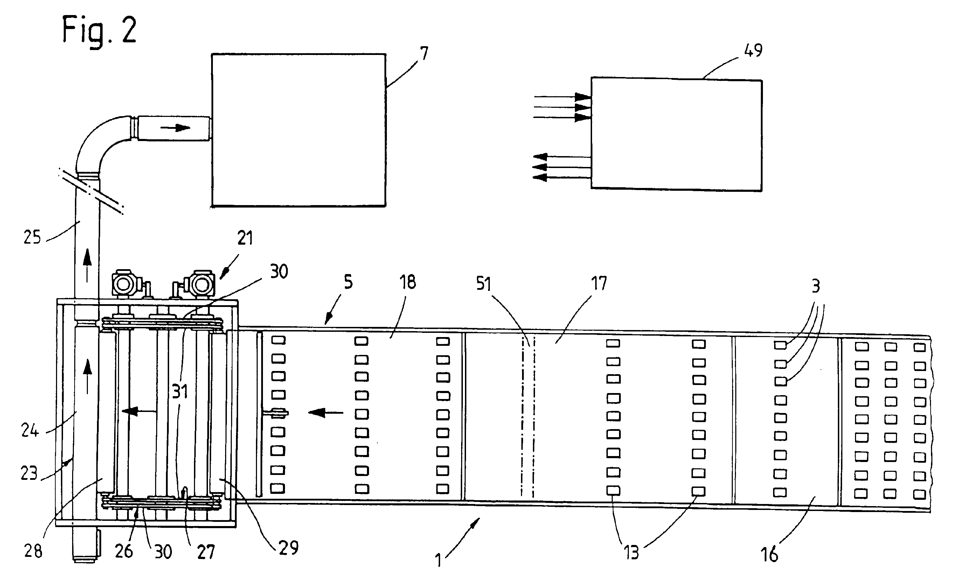

Die teilweise in den Figuren 1 und 2 ersichtliche Einrichtung 1 bzw. Anlage 1 dient zum Herstellen, Fördern und Verpacken von Gegenständen 3, nämlich Schokoladentafeln bzw. der vorgenannten Produkte, und besitzt eine nicht gezeichnete Produktionsvorrichtung, eine Fördereinrichtung 5 und mehrere Verpackungsvorrichtungen, von denen eine in Fig. 2 gezeichnet und mit 7 bezeichnet ist. Die Fördereinrichtung 5 besitzt eine Förderbahn 11 mit einer Anzahl von Teilen oder Abschnitten, die ungefähr horizontal oder ein wenig gegen eine horizontale Ebene geneigt sind. Die Produktionsvorrichtung ist ausgebildet, um die Gegenstände 3, z.B. unverpackte Schokoladentafeln, herzustellen und diese in quer zur Längs- und Förderrichtung verlaufenden Reihen 13 auf der Förderbahn 11 anzuordnen. Eine nicht gezeichnete Metalldetektions- und Entfernungsvorrichtung ist an der Förderbahn 11 in bezug auf die Förderrichtung nach der Produktionsvorrichtung angeordnet. Diese Vorrichtung kann das Vorhandensein von Metallteilchen in einer Schokoladentafel feststellen und besitzt ein Auswurforgan, zum Auswerfen und Entfernen einer Reihe 13. Die Förderbahn 11 hat eine entlang dem Förderweg nach der Metalldetektions- und Entfernungsvorrichtung angeordnete Weiche 15 mit einem verstellbaren Weichenelement 16. Dieses ist um eine horizontale Schwenkachse in zwei verschiedene Schwenk-Stellungen verschwenkbar. Wenn das Weichenelement 16 sich in der oberen unteren, in Fig. 1 mit vollen Linien gezeichneten Schwenk-Stellung befindet, folgt auf das Weichenelement 16 eine Zufuhrbahn 17, von der mindestens der entlang dem Förderweg letzte Endabschnitt 18 gerade und horizontal ist. Beim Ende des Endabschnitts 18 ist eine erfindungsgemässe Ausgleichsvorrichtung 21 mit einer Abtransportierbahn 23 angeordnet. Die letztere hat am Anfang eine Querbahn 24. Deren Förderrichtung ist horizontal, gerade, und zur Förderrichtung des Endabschnitts 18 rechtwinklig. Die Abtransportierbahn 23 hat ferner ein auf die Querbahn 24 folgendes Lückenschliessband 25 und ist mit seinem Ende mit dem Eingang der Verpackungsvorrichtung 7 verbunden.

Die Förderelemente der verschiedenen genannten Bahnteile und Abschnitte der Förderbahn 11 sind mindestens zum grössten Teil durch Förderbänder gebildet. Dies gilt insbesondere für die Zufuhrbahn 17 und die Querbahn 24. Die Bahnteile können mindestens zum Teil jedoch auch aus in der Fördertechnik bekannten Rollenbahnen gebildet sein.

Die Ausgleichsvorrichtung 21 besitzt erfindungsgemäss zwei Pufferspeicher 26 und 27, die gemeinsam in einem Gestell angeordnet sind und beispielsweise je sieben Speichereinheiten 28 bzw. 29 besitzen, von denen jede zum Aufnehmen und vorübergehenden Speichern einer Reihe 13 von Gegenständen 3, d.h. Schokoladentafeln dient. Die Speichereinheiten 28 und 29 bestehen vorzugsweise aus Gondeln mit mindestens einer, beispielsweise zwei, vorzugsweise bis zu sechs ebenen Auflageflächen für die Gegenstände 3.

Beim gezeichneten Ausführungsbeispiel sind die Speichereinheiten bzw. Gondeln 28 und 29 eigenstabile Korpusse, bestehend aus zwei Produktträgerplatten, auf denen die Produktereihen gelagert und transportiert werden können. Die Gondeln 28 und 29 sind vorzugsweise mit Bolzen auf je einem endlosen Kettenpaar 30 bzw. 31 hängend befestigt, sodass sie unabhängig von der Stellung der Ketten stets ihre vertikale Lage beibehalten. Sie sind darüber hinaus von geringem Gewicht und können verhältnismässig schnell manuell ein- und ausgehängt werden. Dies ist aus hygienischer Hinsicht ein bedeutender Vorteil, will man zum Beispiel bei einem Produktewechsel die Gondeln 28, 29 auswechseln.

Die Gondeln 28 bzw. 29 sind jeweils mit einem bestimmten Abstand auf dem Kettenpaar 30 bzw. 31 aufgehängt und bilden auf höchstens der halben Länge des entsprechenden Kettenpaares je einen Gondelzug, wobei sich der Abstand zwischen den Gondeln innerhalb eines Zuges nach Höhe und Länge der zu handhabenden Produkte richtet.

Die beiden Kettenpaare 30 und 31 und somit auch die Gondeln 28 und 29 sind erfindungsgemäss fluchtend zu einander angeordnet, d.h. sie werden um gemeinsame Achsen umgelenkt, welchen im Gestell paarweise vertikal übereinander gelagerte Kettenradpaare 32, 33, 34 zugeordnet sind, d.h. je ein Kettenradpaar für den Pufferspeicher 26 und ein Kettenradpaar für den Speicher 27. Die Kettenpaare 30, 31 werden darüber hinaus über je eine Welle angetrieben, d.h. es ist je ein Antrieb für das äussere Kettenpaar 30 und ein Antrieb für das innere Kettenpaar 31 vorgesehen.

Die beiden Antriebe werden durch je einen steuerbaren Elektromotor 35, 36 gebildet, um die beiden unteren Kettenräder 33 bzw. 34 unabhängig voneinander anzutreiben.

Die beiden Pufferspeicher 26 und 27 können nötigenfalls noch um mindestens eine zentrale Umlenkachse umgelenkt werden, zum Beispiel um Kettenradpaare 37 herumlaufen, um dadurch bei gleicher Abmessung die Speicherkapazität der Ausgleichsvorrichtung 21 zu erhöhen.

Zur Ausgleichsvorrichtung 21 gehören ferner eine Beladestation und eine Entladestation. Diese Stationen können wahlweise am oberen oder unteren Ende der vorderen bzw. hinteren Stirnseite der Vorrichtung 21 angeordnet sein.

Die Ausgleichsvorrichtung 21 weist ferner nur schematisch dargestellte Transfermittel auf, um die Gegenstände 3 an der Beladestation von der Zufuhrbahn 17 in den Pufferspeicher 27 bzw. 28 und an der Entladestation von diesen Speichern auf die Querbahn 24 zu transferieren. Die Transfermittel weisen zwei steuerbare Schiebevorrichtungen 38, 39 auf. Jede Schiebevorrichtung 38, 39 hat einen Schieber, der mit einer einen Pneumatikzylinder oder einen Elektromotor aufweisenden Stellvorrichtung horizontal und parallel zur Förderrichtung des Endabschnitts 18 der Zufuhrbahn 17 verschiebbar ist. Der Schieber der ersten Schiebevorrichtung 38 befindet sich in der Ruhe-Stellung so hoch über dem Zufuhrbahn-Endabschnitt 18, dass die Zufuhrbahn 17 Gegenstände 3 unter dem Schieber hindurch fördern kann. Dieser Schieber ist zum Beispiel höhenverstellbar und kann ausgehend von der Ruhe-Sellung annähernd bis zur Oberfläche des Förderbandes des Zufuhrbahn-Endabschnitts abgesenkt werden. Wenn der Schieber ausgehend von seiner Ruhestellung nach dem Passieren einer Reihe 13 abgesenkt wurde, kann der Schieber diese Gegenstände auf eine Auflagefläche einer leeren, sich in der Transfer-Stellung befindenden Gondel 28 bzw. 29 schieben. Der Schieber der zweiten Schiebevorrichtung 37 befindet sich in der Ruhe-Stellung auf der der Zufuhrbahn 17 zugewandten Seite der Querbahn 24. Wenn sich eine Gondel 28 bzw. 29 mit einer Reihe von Gegenständen 3 an der Entladestation in der Transfer-Stellung befindet, kann der Schieber der zweiten Schiebevorrichtung 37 diese Gegenstände auf die Querbahn 24 schieben.

Wenn sich das Weichenelement 16 der Weiche 15 in seiner unteren, in Figur 1 strichpunktiert gezeichneten Schwenkstellung befindet, schliesst eine Abzweigbahn 41 an das Weichenelement an. Die Abzweigbahn 41 ist mit mindestens einer zusätzlichen Verpackungsvorrichtung und vorzugsweise über mindestens eine zusätzliche Weiche mit zwei oder mehr zusätzlichen Verpackungsvorrichtungen verbunden. Es können also insgesamt mindestens zwei und zum Beispiel drei oder noch mehr Verpackungsvorrichtungen vorhanden sein. Dabei ist für jede zusätzliche, nicht gezeichnete Verpackungsvorrichtung analog wie für die gezeichnete Verpackungsvorrichtung 7 eine Ausgleichsvorrichtung 21, eine zu dieser führende Zufuhrbahn 17 und eine von der Ausgleichsvorrichtung 21 wegführende Abtransportierbahn 23 vorhanden.

Die Fördereinrichtung 5 besitzt steuerbare, nicht gezeichnete Antriebsvorrichtungen mit Elektromotoren zum Antreiben der verschiedenen Förderbänder und von allenfalls noch vorhandenen Rollenbahnen. Ferner sind nicht gezeichnete Detektormittel vorhanden. Diese weisen an verschiedenen Stellen der Anlage 1 angeordnete Detektoren auf. Diese bestehen zum Beispiel aus Lichtschranken oder dergleichen und können elektrische Signale erzeugen, die darstellen, ob sich an der betreffenden Stelle Gegenstände 3 befinden oder nicht. Es hat zum Beispiel unter anderem am Anfang und am Ende des horizontalen Zufuhrbahn-Endabschnitts 18 je einen Detektor. Ferner kann ein Detektor vorhanden sein, um festzustellen, ob eine sich momentan in der Transfer-Stellung befindende Speichereinheit eine Reihe Gegenstände enthält oder nicht. Des weiteren ist beispielsweise mindestens ein nicht gezeichneter Detektor bei der Abtransportierbahn angeordnet.

Die Einrichtung besitzt ferner schematisch in Fig. 2 durch einen Block dargestellte Steuermittel 49, die beispielsweise manuell betätigbare Bedienungselemente, elektronische Elemente, beispielsweise mindestens einen digitalen Prozessor, Anzeige- und Registriergeräte sowie Datenspeicher sowie eventuell pneumatische und/oder hydraulische Steuerelemente, wie Ventile und dergleichen aufweisen. In Fig. 2 durch Pfeile angedeutete, elektrische Leitungen und eventuell Fluidleitungen verbinden die Steuermittel 49 mit der nicht gezeichneten Produktionsvorrichtung, den Verpakkungsvorrichtungen 7, der Metalldetektions- und Entfernungsvorrichtung, den Detektoren und den Antriebs- und/oder Stellvorrichtungen der Förderbänder, der Rollenbahn(en), der Weiche(n) 15, der bzw. jeder Ausgleichsvorrichtung 21 sowie der Schiebevorrichtungen 38 und 39. Der Prozessor verarbeitet beim Betrieb die ihm von den Detektoren zugeführten Signale und kann aus diesen und der zeitlichen Abfolge von diesen Informationen über die Bewegungen sowie Geschwindigkeiten der Gegenstände und die Abstände zwischen diesen gewinnen. Die Steuermittel 49 sind im übrigen derart ausgebildet, dass die Herstellung, Förderung, Speicherung und Verpackung der Gegenstände 3 wahlweise mit Hilfe der Bedienungselemente durch mindestens eine Person und/oder mindestens zeitweise automatisch gesteuert werden können.

Nun wird der Betrieb der Einrichtung bzw. Anlage 1 und der zu dieser gehörenden Fördereinrichtung 5 erläutert. Dabei wird zunächst der im Idealfall stattfindende Idealbetrieb beschrieben. Bei diesem produziert die Produktionsvorrichtung fortlaufend Gegenstände und führt diese in gleichmässigen Zeitabständen der Förderbahn 11 zu, so dass die zur gleichen Reihe 13 gehörenden, einander benachbarten Gegenstände 3 gleiche Abstände voneinander haben und dass vor allem auch die aufeinanderfolgenden Reihen 13 gleiche Abstände voneinander haben. Die Förderbahn 11 transportiert die Gegenstände durch die nicht gezeichnete Metalldetektions- und Entfernungsvorrichtung zur Weiche 15. Diese verteilt die Gegenstände 3 auf die Zufuhrbahn 17 und die Abzweigbahn 41. Die Steuermittel 49 steuern die Weiche 15 derart, dass beim Idealbetrieb in regelmässigen Zeitabständen Reihen 13 auf die Zufuhrbahn 17 gelangen. Die Weiche führt der Abzweigbahn 41 für jede mit dieser verbundene Verpackungsvorrichtung die gleiche Anzahl Reihen pro Zeiteinheit zu.

Das bzw. jedes Förderband der Zufuhrbahn 17 läuft beim Idealbetrieb kontinuierlich mit konstanter Geschwindigkeit, trägt dann in identischen Abständen aufeinander folgende Reihen und fördert diese in gleichmässigen Zeitabständen und mit konstanter Förderrate zur Ausgleichsvorrichtung 21.

Wenn die Ausgleichsvorrichtung 21 beim Start der Einrichtung leer ist, befindet sich ein Gondelzug, beispielsweise der Gondelzug des Pufferspeichers 27, an der Beladestation und der andere Gondelzug, in diesem Fall der Gondelzug des Pufferspeichers 28, an der Entladestation. Beim Eintreffen von Gegenständen 3 an der Ausgleichsvorrichtung 21 wird dann zuerst der Gondelzug des Pufferspeichers 27 schrittweise bewegt und gefüllt. Dabei schiebt die Schiebevorrichtung 38 jeweils eine unter ihrem Schieber hindurch geförderte Reihe 13 von Gegenständen 3 von der Zufuhrbahn 17 auf eine Auflagefläche einer sich in der Transfer-Stellung befindenden, leeren Gondel 29. Die Steuermittel 49 steuern die Antriebsvorrichtung des Pufferspeichers 27 derart, dass schrittweise zuerst alle Auflageflächen der ersten Gondel 29 und danach jeweils die nächstuntere Gondel gefüllt wird. Wenn nach diesem Auffüllvorgang alle Gondeln 29 Reihen von Gegenständen 3 tragen, wird der Gondelzug des Pufferspeichers 27 zur Entladestation gefahren, wobei gleichzeitig der dort positionierte, leere Gondelzug des Pufferspeichers 26 zur Beladestation geführt wird.

An der Entladestation werden dann mit der Schiebevorrichtung 39 die Produktreihen 13 vom Pufferspeicher 27 auf das Queraustrageband 24 ausgelagert und via Lückenschliessband 25 der Verpackungsmaschine 7 zugeführt. Hierfür wird der Gondelzug ebenfalls wieder taktweise auf das Austrageniveau positioniert, damit Reihe für Reihe ausgeschoben werden kann. Während diesem Auslagern befindet sich der Gondelzug des Pufferspeichers 28 an der Beladestation, um mit neuen Produktreihen befüllt zu werden. Dies erfolgt simultan zum Auslagern; es sind also die einlaufseitige Produktion und die auslaufseitige Verpackung für eine gewisse Zeit von einander entkoppelt. Sobald der Gondelzug des Speichers 26 voll beladen ist, fährt dieser umgehend zur Entladestation zurück und schliesst zum dortigen Gondelzug des Speichers 27 auf, der nach dem Entladen zur Beladestation zurück fährt, um erneut Produktreihen aufzunehmen.

Der vorgängig beschriebene Idealbetrieb kann durch verschiedene Störungen gestört werden. Es kann zum Beispiel ab und zu eine Metallteilchen, zum Beispiel Metallspäne oder dergleichen enthaltende Schokoladentafel zur Metalldetektions- und Entfernungsvorrichtung gelangen. Die Vorrichtung 14 entfernt dann die Reihe 13 mit der metallhaltigen Tafel. Danach ergibt sich zum Beispiel auf der Zufuhrbahn 17 eine strichpunktiert in Fig. 2 angedeutete Lücke 51 bei einer Stelle, bei der eigentlich eine Reihe 13 vorhanden sein sollte. Die Steuermittel 49 können das Fehlen einer Reihe aufgrund der Signale feststellen, die von den bei der Zufuhrbahn 11 angeordneten Detektoren geliefert werden.

Die erfindungsgemässe Ausgleichsvorrichtung 21 wird in diesem Fall derart gesteuert, dass die auf der horizontalen Förderbahn 17 ankommenden Schokoladentafeln 3 reihenweise und lückenlos in den Gondelzügen abgelegt und anschliessend staudrucklos und ebenfalls lückenlos an die der Ausgleichsvorrichtung 21 zugeordnete Verpackungsmaschine abgeben werden. Diese Abgabe erfolgt in Abhängigkeit des Betriebszustandes der Verpackungsmaschinen, so dass ein Aufgabe- bzw. Abgabeausgleich zwischen der Produktionsmaschine und den Verpackungsmaschinen sichergestellt werden kann.

Es kann auch geschehen, dass die Zufuhrrate der von der Zufuhrbahn zugeführten Gegenstände und die Verpackungsrate der Verpackungsvorrichtung 7 vorübergehend voneinander abweichen. Die Produktionsrate der Produktionsvorrichtung kann zum Beispiel wegen irgend einer kleinen Störung vorübergehend etwas kleiner sein als beim Idealbetrieb, so dass die Zufuhrrate der von der Zufuhrbahn 17 zur Querbahn 24 geförderten Gegenstände kleiner ist als die Verpackungsrate der Verpakkungsvorrichtung. In diesem Fall können die Steuermittel beispielsweise die Ausgleichsvorrichtung 21 derart steuern, dass die beiden Gondelzüge bei gleichbleibender Entladegeschwindigkeit an der Beladestation vorübergehend mit einer tieferen Taktfrequenz beladen werden, so dass die Gegenstände trotz Taktabweichung in den beim Idealbetrieb vorgesehenen Zeitabständen zur Verpackungsvorrichtung gelangen.

Es ist auch möglich, dass die Verpackungsvorrichtung vorübergehend langsamer arbeitet als vorgesehen. Dies kann zum Beispiel geschehen, wenn die zur Verpackungsvorrichtung geförderten Gegenstände ein wenig schief zur Förderrichtung auf der Abtransportierbahn liegen und dann vor dem Verpacken noch ausgerichtet werden müssen. Beim automatischen Betrieb bewirken die Steuermittel 49 in einem solchen Fall, dass die Förderung des Abschnittes 25 der Abtransportierbahn 23 vorübergehend verlangsamt oder die Taktfrequenz der Entladung vorübergehend verringert oder die Entladung eventuell sogar kurzzeitig vollständig unterbrochen wird.

Aufgrund der vorstehenden Ausführungen lässt sich zusammenfassend feststellen, dass beim Betrieb der erfindungsgemässen Ausgleichsvorrichtung 21, der Verpackungsprozess vom Produktionsprozess kurzzeitig lokal entkoppelt werden kann, um die jeweilige Verpackungsvorrichtung möglichst kontinuierlich mit Produktreihen zu versorgen.

Durch diese zeitliche Entkoppelung ist es möglich, Diskontinuitäten im Produktionsfluss, von der Verpackung fern zu halten. Ebenso können kurzzeitige Stops der Verpackungseinheit aufgefangen werden, ohne dass Produktreihen verloren gehen. Ferner lassen sich mit der erfindungsgemässen Anlage lokale Asynchronitäten zwischen Produktionsgeschwindigkeit und Verpackungsgeschwindigkeit überbrücken und Schwankungen ausgleichen. Somit kann mit der erfindungsgemässen Anlage die Effizienz einzelner Arbeitsstationen und insbesondere ganzer Produktionslinien wesentlich gesteigert werden.

Die Anlage bzw. Einrichtung kann auf verschiedene Arten geändert werden. So kann die maximal für die Pufferspeicher 26 und 27 vorgesehene Anzahl Gondeln zum Beispiel höchstens zwanzig, beispielsweise höchstens zehn betragen.

## Patentansprüche

1. Einrichtung zum Fördern von gleichartigen Gegenständen (3), mit einer Zufuhrbahn (17) zum Zuführen von Gegenständen (3) zu einer Ausgleichsvorrichtung (21) und einer Abtransportierbahn (23), um Gegenstände (3) von der Ausgleichsvorrichtung (21) abzutransportieren, **dadurch gekennzeichnet, dass** die Ausgleichsvorrichtung (21) zwei Pufferspeicher (26, 27) und Transportmittel aufweist, um die von der Zufuhrbahn (17) kommenden Gegenstände (3) an einer Beladestation wahlweise in einen der beiden Pufferspeicher (26, 27) und an einer Entladestation von diesen zur Abtransportierbahn (23) zu transferieren, dass die beiden Pufferspeicher (26, 27) gemeinsam in einem Gestelle angeordnet sind, dass jeder Pufferspeicher (26, 27) mehrere intermittierend bewegbare Speichereinheiten (28, 29) besitzt, die an einem vertikal über mehrere Umlenkrollen laufenden Kettenpaar (30, 31) hängend befestigt sind und auf höchstens der halben Länge des Kettenpaares (30, 31) je einen Gondelzug bilden, dass die beiden Kettenpaare (30, 31) und somit auch die Speichereinheiten (28, 29) fluchtend zu einander angeordnet sind und über je eine Welle angetrieben werden, d.h., es ist je ein Antrieb für das erste, äussere Kettenpaar (30) und ein Antrieb für das zweite, innere Kettenpaar (31) vorgesehen.

2. Einrichtung nach Anspruch 1, **dadurch gekennzeichnet, dass** Steuermittel (49) vorhanden sind, dass die Steuermittel(49) mit Detektormitteln sowie mit steuerbaren Stellmitteln der Pufferspeicher (27, 28) verbunden und ausgebildet sind, um die Einrichtung (1) derart automatisch zu steuern, dass die Gegenstände (3) auch bei unregelmässiger Zufuhr der Gegenstände (3) durch die Zufuhrbahn (17) in gleichmässigen Abständen voneinander auf der Abtransportierbahn (23) angeordnet werden.

3. Einrichtung nach Anspruch 1 oder 2, **dadurch gekennzeichnet, dass** die Speichereinheiten (28, 29) aus Gondeln bestehend aus mehreren Produktträgerplatten gebildet werden, und dass die Gondeln mit Bolzen auf je einem endlosen Kettenpaar (30, 31) hängend befestigt sind, so dass sie unabhängig von der Stellung der Ketten stets ihre vertikale Lage beibehalten.

4. Einrichtung nach einem der Ansprüche 1 bis 3, **dadurch gekennzeichnet, dass** die beiden Antriebe der Pufferspeicher (27, 28) durch je einen steuerbaren Elektromotor (35, 36) gebildet werden, um die beiden unteren Kettenräder (33, 34) anzutreiben.

5. Einrichtung nach einem der Ansprüche 1 bis 4, **dadurch gekennzeichnet, dass** die Pufferspeicher (26, 27) noch um mindestens eine gemeinsame zentrale Umlenkachse, welcher weitere Kettenräder (37) zugeordnet sind, herumlaufen, um dadurch bei gleicher Abmessung die Speicherkapazität der Ausgleichsvorrichtung (21) zu erhöhen.

6. Vorrichtung nach einem der Ansprüche 1 bis 5, **dadurch gekennzeichnet, dass** die Pufferspeicher (26, 27) höchstens zwanzig Speichereinheiten (28, 29) und zum Beispiel höchstens zehn Speichereinheiten (28, 29) aufweist.
